# EUROPEAN PATENT APPLICATION

(11) **EP 4 293 625 A1**
(43) Date of publication of application: **20.12.2023**
(21) Application number: 22752250.5
(22) Date of filing: 08.02.2022
(51) Int. Cl.: G06T 11/20

(54) **MAP DISPLAY METHOD AND APPARATUS, MEDIUM, AND ELECTRONIC DEVICE**

(30) Priority: 10.02.2021 CN 202110184745; 10.02.2021 CN 202110184843
(71) Applicant: Beijing Roborock Innovation Technology Co., Ltd., Beijing 102206 (CN)
(72) Inventor: SUN, Jianbin, Beijing 102206 (CN); XIANG, Lizhi, Beijing 102206 (CN); JIA, Zhendong, Beijing 102206 (CN); HOU, Zhengtao, Beijing 102206 (CN); CONG, Yiming, Beijing 102206 (CN)
(74) Representative: Michalski Hüttermann & Partner Patentanwälte mbB
(86) International application number: PCT/CN2022/075551
(87) International publication number: WO 2022/171090

(57) **Abstract**

A map display method, a map display apparatus, a computer-readable storage medium, and an electronic device. The map display method comprises: obtaining room map data and regional map data; drawing a room map according to the room map data, and drawing a regional map layer on the room map according to the regional map data; and displaying the room map that is covered by the regional map layer. According to the method, the regional map layer can be displayed on the room map.

## Description

### CROSS-REFERENCE TO RELATED APPLICATION

This application claims priority to Chinese patent application No. 202110184745.8 and Chinese patent application No. 202110184843.1, both filed on February 10, 2021, which are incorporated herein by reference in their entireties.

### TECHNICAL FIELD

The present disclosure relates to the field of smart home, and more particularly to a map display method, a map display device, a computer-readable storage medium, and an electronic apparatus.

### BACKGROUND ART

In recent years, with the rapid development of computer technologies and artificial intelligence science, smart robot technologies have gradually become a hot topic in the field of modern robot research. Sweeping robots, as the most practical type of smart robots, can automatically complete ground cleaning by virtue of specific artificial intelligence.

To help a user control a sweeping robot to perform cleaning, it is usually necessary to display, on a user equipment, a map scanned by the sweeping robot, so that the user can control a cleaning mode based on the map.

However, an existing map only shows a boundary outline of an entire room, and there is no map display corresponding to a carpeted region in the room.

### SUMMARY OF THE INVENTION

An objective of the present disclosure is to provide a map display method, a map display device, a map drawing method, a map drawing device, a computer-readable storage medium, and an electronic apparatus, which can solve at least one of the above technical problems.

According to specific embodiments of the present disclosure, according to a first aspect, the present disclosure provides a map display method, including: acquiring room map data and region map data; drawing a room map based on the room map data, and drawing a region map layer on the room map based on the region map data; and displaying the room map covered with the region map layer.

Optionally, the drawing the region map layer on the room map based on the region map data includes: determining a position relationship between the room map and the region map layer based on the room map data and the region map data; and demarcating a sub-region corresponding to the region map layer from the room map based on the position relationship, and drawing the region map layer on the sub-region.

Optionally, the drawing the region map layer on the sub-region includes: magnifying the sub-region by a preset scale, and obtaining the region map layer by drawing units corresponding to the region map data on the magnified sub-region.

Optionally, the region map data includes region boundary coordinate data; and the drawing the units corresponding to the region map data on the magnified sub-region includes: drawing point units corresponding to the region map data on the magnified sub-region one by one.

Optionally, the method further includes: after obtaining the region map layer, restoring the sub-region to an original size, and covering the room map with the region map layer.

Optionally, an area of the sub-region is greater than an area of the region map layer, so that the region map layer is drawn within the sub-region.

Optionally, the room map data includes room boundary coordinate data; and the drawing the room map based on the room map data includes: determining a shape and a size of a room map layer based on the room boundary coordinate data; and obtaining the room map by drawing the room boundary coordinate data on the room map layer one by one.

According to a second aspect, the present disclosure provides a map display device. The map display device includes: a data acquiring module, configured to acquire room map data and region map data; a map drawing module, configured to draw a room map based on the room map data, and draw a region map layer on the room map based on the region map data; and a map display module, configured to display the room map covered with the region map layer.

According to a third aspect, the present disclosure provides a computer-readable storage medium, storing a computer program therein. When the computer program is executed by a processor, the above map display method is implemented.

According to a fourth aspect, the present disclosure provides an electronic apparatus. The electronic apparatus includes: a processor; and a memory, configured to store an instruction executable by the processor, wherein the processor is configured to execute the executable instruction to implement the above map display method.

Compared to the prior art, the map display method provided in some exemplary embodiments of the present disclosure is applied to a user equipment interacting with an automatic cleaning apparatus. After the user equipment acquires room map data and region map data that are sent by the automatic cleaning apparatus, a region map layer may be drawn, based on the region map data, on a room map that is generated based on the room map data, so that the room map covered with the region map layer may be obtained, and the room map may be displayed by the user equipment. In other words, when the room map is displayed on the user equipment, the region map layer is also displayed on the room map. This can help a user more accurately locate and control a cleaned region of the automatic cleaning apparatus.

According to specific embodiments of the present disclosure, according to a fifth aspect, the present disclosure provides a map drawing method, including: generating an initialization region by scanning a boundary of a surface medium region; obtaining a combined region by combining boundary coordinates of the initialization region; dividing the combined region into a plurality of sub-regions based on a preset shape; and obtaining a surface medium region map by drawing the boundary of the surface medium region based on the sub-regions and the combined region.

Optionally, the initialization region includes a plurality of initial boundary coordinates; and the combined region includes a plurality of combined boundary coordinates.

Optionally, the drawing the boundary of the surface medium region based on the sub-regions and the combined region includes: deleting combined boundary coordinates that are on outer sides of the sub-regions and close to the sub-regions; and sequentially connecting the remaining combined boundary coordinates to draw the boundary of the surface medium region.

Optionally, after the boundary of the surface medium region is drawn, the method further includes: obtaining the surface medium region map by filling a surface medium mark within the boundary of the surface medium region.

Optionally, the obtaining the combined region by combining the boundary coordinates of the initialization region includes: obtaining the combined region by combining adjacent boundary coordinates of the initialization region.

Optionally, the method further includes: after obtaining the surface medium region map, storing the surface medium region map in an automatic cleaning apparatus, and sending the surface medium region map to a user terminal by using the automatic cleaning apparatus.

Optionally, the preset shape is one of a square, a circle, and a rhombus.

According to a sixth aspect, the present disclosure provides a map drawing device. The map driving device includes: a boundary scanning module, configured to generate an initialization region by scanning a boundary of a surface medium region; a region combining module, configured to obtain a combined region by combining boundary coordinates of the initialization region; and a map drawing module, configured to: divide the combined region into a plurality of sub-regions based on a preset shape; and obtain a surface medium region map by drawing the boundary of the surface medium region based on the sub-regions and the combined region.

According to a seventh aspect, the present disclosure provides a computer-readable storage medium, storing a computer program therein. When the computer program is executed by a processor, the above map drawing method is implemented.

According to an eighth aspect, the present disclosure provides an electronic apparatus. The electronic apparatus includes: a processor; and a memory, configured to store an instruction executable by the processor, wherein the processor is configured to execute the executable instruction to implement the above map drawing method.

Compared to the prior art, the map drawing method provided in some exemplary embodiments of the present disclosure includes the following steps: scanning a boundary of a surface medium region; generating an initialization region; obtaining a smooth combined region based on the initialization region; and drawing the boundary of the surface medium region based on combination of sub-regions and the combined region. In this way, a surface medium region map can be drawn. A boundary of the obtained surface medium region map is smooth, so that the surface medium region map is finer. This helps the automatic cleaning apparatus subsequently clean and locate the surface medium region or an edge region of the surface medium region.

### BRIEF DESCRIPTION OF THE DRAWINGS

The accompanying drawings here, which are incorporated in the specification and constitute a part thereof, show embodiments conforming to the present disclosure, and are used to explain the principles of the present disclosure together with the specification. Apparently, the accompanying drawings in the following description are only some embodiments of the present disclosure, and for those of ordinary skills in the art, other drawings may also be obtained from these accompanying drawings without creative efforts. In the accompanying drawings:
FIG. 1 is a perspective view of an automatic cleaning apparatus according to an embodiment of the present disclosure;
FIG. 2 is a schematic structural diagram of a bottom of an automatic cleaning apparatus according to an embodiment of the present disclosure;
FIG. 3 is a perspective view of a driving wheel assembly on a side according to an embodiment of the present disclosure;
FIG. 4 is a front view of the driving wheel assembly on a side according to an embodiment of the present disclosure;
FIG. 5 is a perspective view of a dust box according to an embodiment of the present disclosure;
FIG. 6 is a perspective view of a blower according to an embodiment of the present disclosure;
FIG. 7 is a schematic diagram of a dust box in an open state according to an embodiment of the present disclosure;
FIG. 8 is a schematic diagram of a dust box and a blower in an assembled state according to an embodiment of the present disclosure;
FIG. 9 is an exploded view of an automatic cleaning apparatus according to an embodiment of the present disclosure;
FIG. 10 is a structural diagram of a supporting platform of an automatic cleaning apparatus according to an embodiment of the present disclosure;
FIG. 11 is a structural diagram of a vibrating member of an automatic cleaning apparatus according to an embodiment of the present disclosure;
FIG. 12 is a schematic diagram of a cleaning head driving mechanism based on a crank slider mechanism according to another embodiment of the present disclosure;
FIG. 13 is a schematic diagram of a cleaning head driving mechanism based on a double-crank mechanism according to another embodiment of the present disclosure;
FIG. 14 is a schematic diagram of a cleaning head driving mechanism based on a crank mechanism according to another embodiment of the present disclosure;
FIG. 15 is a schematic diagram of an automatic cleaning apparatus in a lifting state according to an embodiment of the present disclosure;
FIG. 16 is a schematic diagram of an automatic cleaning apparatus in a lowering state according to an embodiment of the present disclosure;
FIG. 17 is a schematic diagram of a four-link lifting and lowering structure in a lifting state according to an embodiment of the present disclosure;
FIG. 18 is a schematic diagram of a four-link lifting and lowering structure in a lowering state according to an embodiment of the present disclosure;
FIG. 19 is a flowchart of a map display method according to an embodiment of the present disclosure;
FIG. 20 is a schematic structural diagram of drawing a region map layer on a room map according to an embodiment of the present disclosure;
FIG. 21 is a schematic structural diagram of an initialization region obtained after scanning a surface medium region according to an embodiment of the present disclosure;
FIG. 22 is a schematic structural diagram of a combined region obtained based on the initialization region shown in FIG. 21;
FIG. 23 is a block diagram of a map display device according to an embodiment of the present disclosure;
FIG. 24 is a flowchart of a map drawing method according to an embodiment of the present disclosure;
FIG. 25 is a schematic structural diagram of an initialization region obtained after scanning a surface medium region according to an embodiment of the present disclosure;
FIG. 26 is a schematic structural diagram of a combined region obtained based on the initialization region shown in FIG. 25;
FIG. 27 is a schematic structural diagram of a sub-region determined based on the combined region shown in FIG. 26;
FIG. 28 is a schematic structural diagram of a surface medium region map drawn based on a map drawing method according to an embodiment of the present disclosure;
FIG. 29 is a block diagram of a map drawing device according to an embodiment of the present disclosure; and
FIG. 30 is a schematic diagram of a module of an electronic apparatus according to an embodiment of the present disclosure.

### DETAILED DESCRIPTION

To make the objectives, technical solutions and advantages of the present disclosure clearer, the present disclosure will be further described in detail below with reference to the accompanying drawings. It is obvious that the described embodiments are only some, but not all of the embodiments of the present disclosure. All other embodiments obtained by those of ordinary skills in the art without creative efforts based on the embodiments in the present disclosure are within the protection scope of the present disclosure.

The terms used in the embodiments of the present disclosure are for the purpose of describing particular embodiments only and are not intended to limit the present disclosure. The singular forms "a/an", "said" and "the" used in the embodiments of the present disclosure and the appended claims are intended to include the plural forms as well, unless otherwise indicated clearly in the context. The term "a plurality of" generally includes at least two.

It is to be understood that, the term "and/or" used herein only describes an association relationship between associated objects, and indicates that there may be three kinds of relationships. For example, A and/or B may indicate three cases: A exists alone, A and B exist at the same time, and B exists alone. In addition, the character "/" herein generally indicates an "or" relationship between the contextual objects.

It is to be understood that, although the terms first, second, third, etc. may be used to describe in the embodiments of the present disclosure, these should not be limited to these terms. These terms are only used to distinguish. For example, "first" ... may also be referred to as "second" without departing from the scope of the embodiments of the present disclosure. Similarly, "second" ... may also be referred to as "first".

Depending on the context, the word "if" or "in the case of" as used herein may be interpreted as "while" or "when" or "in response to determining" or "in response to detecting". Similarly, depending on the context, the phrase "if determining" or "if detecting (a stated condition or event)" may be interpreted as "when determining" or "in response to determining" or "when detecting (the stated condition or event)" or "in response to detecting (the stated condition or event)".

It is also to be noted that, the terms "including", "containing", or any other variants are intended to cover the nonexclusive inclusion, such that a commodity or device including a series of elements includes not only those elements, but also other elements not listed explicitly or elements inherent to such a commodity or device. Without more limitations, the element defined by the phrase "including a ..." does not exclude the existence of other same elements in the commodity or device including the element.

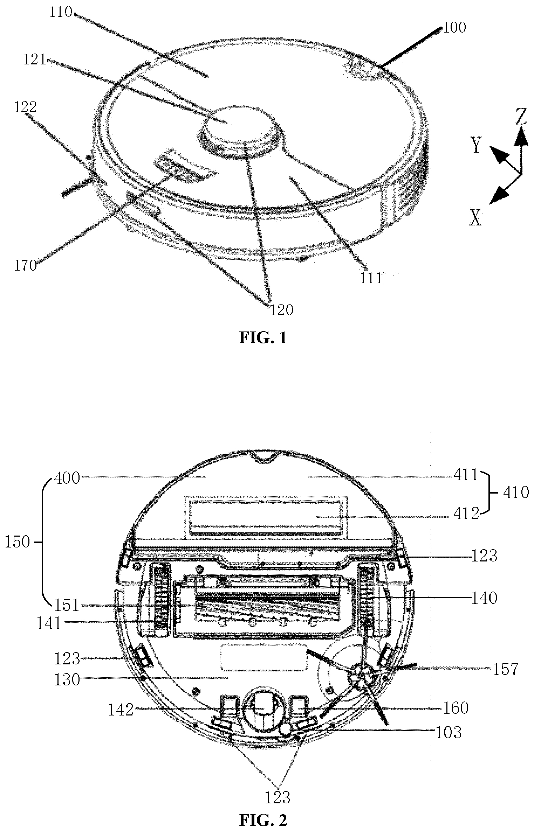

FIG. 1 and FIG. 2 are schematic structural diagrams of an automatic cleaning apparatus according to an exemplary embodiment. As shown in FIG. 1 and FIG. 2, the automatic cleaning apparatus may be a vacuum cleaning robot, or may be a ground mopping/brushing robot, or may be a window climbing robot, or the like. The automatic cleaning apparatus may include a mobile platform 100, a perception system 120, a control system 130, a driving system 140, a cleaning module 150, an energy system 160 and a human-computer interaction system 170.

The mobile platform 100 may be configured to move automatically along a target direction on an operating surface. The operating surface may be a surface to be cleaned by the automatic cleaning apparatus. In some embodiments, the automatic cleaning apparatus may be a ground mopping robot, and thus the automatic cleaning apparatus operates on a ground, and the ground is the operating surface. The automatic cleaning apparatus may also be a window cleaning robot, and thus the automatic cleaning apparatus operates on an outer surface of glass of a building, and the glass is the operating surface. The automatic cleaning apparatus may also be a pipe cleaning robot, and thus the automatic cleaning apparatus operates on an inner surface of a pipe, and the inner surface of the pipe is the operating surface. For the purpose of presentation only, the following description in the present application takes a ground mopping robot as an example for illustration.

In some embodiments, the mobile platform 100 may be an autonomous mobile platform, or a non-autonomous mobile platform. The autonomous mobile platform refers to that the mobile platform 100 itself can automatically and adaptively make an operational decision based on an unexpected environmental input; and the non-autonomous mobile platform itself cannot adaptively make an operational decision based on an unexpected environmental input, but can execute a given procedure or operate according to a certain logic. Correspondingly, when the mobile platform 100 is the autonomous mobile platform, the target direction may be determined autonomously by the automatic cleaning apparatus; and when the mobile platform 100 is the non-autonomous mobile platform, the target direction may be set systematically or manually. When the mobile platform 100 is the autonomous mobile platform, the mobile platform 100 includes a forward portion 111 and a rearward portion 110.

The perception system 120 includes a position determining device 121 located on the mobile platform 100, a buffer 122 located in the forward portion 111 of the mobile platform 100, cliff sensors 123 and sensing devices such as an ultrasonic sensor (not shown), an infrared sensor (not shown), a magnetometer (not shown), an accelerometer (not shown), a gyroscope (not shown), an odometer (not shown), and the like located at a bottom of the mobile platform 100, for providing various position information and motion state information of the automatic cleaning apparatus to the control system 130.

In order to describe behaviors of the automatic cleaning apparatus more clearly, directions are defined as follows: the automatic cleaning apparatus may travel on the ground by various combinations of movements relative to the following three mutually perpendicular axes defined by the mobile platform 100, i.e., a transversal axis x, a front and rear axis y and a center vertical axis z. A forward driving direction along the front and rear axis y is designated as "forward", and a rearward driving direction along the front and rear axis y is designated as "rearward". The transversal axis x is substantially along a direction of an axis center defined by a center point of a driving wheel assembly 141 extending between a right wheel and a left wheel of the automatic cleaning apparatus. The automatic cleaning apparatus may rotate around the x axis. It is referred to as "pitch up" when the forward portion of the automatic cleaning apparatus is tilted upward and the rearward portion thereof is tilted downward, and it is referred to as "pitch down" when the forward portion of the automatic cleaning apparatus is tilted downward and the rearward portion thereof is tilted upward. In addition, the automatic cleaning apparatus may rotate around the z axis. In a forward direction of the automatic cleaning apparatus, it is referred to as "turn right" when the automatic cleaning apparatus is tilted to the right of the y axis, and it is referred to as "turn left" when the automatic cleaning apparatus is tilted to the left of the y axis.

As shown in FIG. 2, the cliff sensors 123 are provided at the bottom of the mobile platform 100 and in front and rear of the driving wheel assembly 141, respectively, for preventing the automatic cleaning apparatus from falling off when the automatic cleaning apparatus retreats, so as to avoid a damage to the automatic cleaning apparatus. The aforementioned "front" refers to a side same as a travelling direction of the automatic cleaning apparatus, and the aforementioned "rear" refers to a side opposite to the travelling direction of the automatic cleaning apparatus.

The position determining device 121 includes, but is not limited to, a camera and a laser distance sensor (LDS) device.

Various components in the perception system 120 may operate independently, or operate together to achieve a purpose function more accurately. The surface to be cleaned is identified by the cliff sensors 123 and the ultrasonic sensor to determine physical properties of the surface to be cleaned, including a surface material, a degree of cleanliness, and the like, and may be determined more accurately in combination with the camera, the LDS device, or the like.

For example, the ultrasonic sensor may determine whether the surface to be cleaned is a carpet. If the ultrasonic sensor determines that the surface to be cleaned is made of a carpet material, the control system 130 controls the automatic cleaning apparatus to perform cleaning in a carpet mode.

The forward portion 111 of the mobile platform 100 is provided with the buffer 122. During cleaning, when the driving wheel assembly 141 propels the automatic cleaning apparatus to travel on the ground, the buffer 122 detects one or more events (or objects) in a travelling path of the automatic cleaning apparatus via a sensor system, e.g., an infrared sensor, and the automatic cleaning apparatus may control the driving wheel assembly 141 based on the event (or object), such as an obstacle or a wall, detected by the buffer 122 to cause the automatic cleaning apparatus to respond to the event (or object), for example, to move away from the obstacle.

The control system 130 is disposed on a main circuit board in the mobile platform 100, and includes a computing processor such as a central processing unit or an application processor, that communicates with a non-transitory memory such as a hard disk, a flash memory and a random-access memory. The application processor is configured to receive environmental information sensed by the plurality of sensors and transmitted from the perception system 120, to draw a simultaneous map of an environment where the automatic cleaning apparatus is located using a positioning algorithm e.g., simultaneous localization and mapping (SLAM), based on obstacle information fed back by the LDS, and to autonomously determine a travelling path based on the environmental information and the environmental map, and then to control the driving system 140 to perform operations, such as travelling forward, travelling backward, and/or steering based on the autonomously determined travelling path. Further, the control system 130 may also determine whether to activate the cleaning module 150 to perform a cleaning operation based on the environmental information and the environmental map.

Specifically, the control system 130 may, based on distance information and speed information which are fed back by the buffer 122, the cliff sensors 123 and the sensing devices such as the ultrasonic sensor, the infrared sensor, the magnetometer, the accelerometer, the gyroscope and the odometer, comprehensively determine a current operation state of the sweeping robot, such as crossing a threshold, getting on a carpet, locating at an edge of a cliff, being stuck from above or below, having a full dust box or being picked up, and will also give specific next-step action strategies for different situations, so that the operation of the automatic cleaning apparatus is more in line with requirements of an owner and provides better user experience. Further, the control system can plan the most efficient and reasonable cleaning path and cleaning mode based on the simultaneous map drawn by the SLAM, thereby greatly improving the cleaning efficiency of the automatic cleaning apparatus.

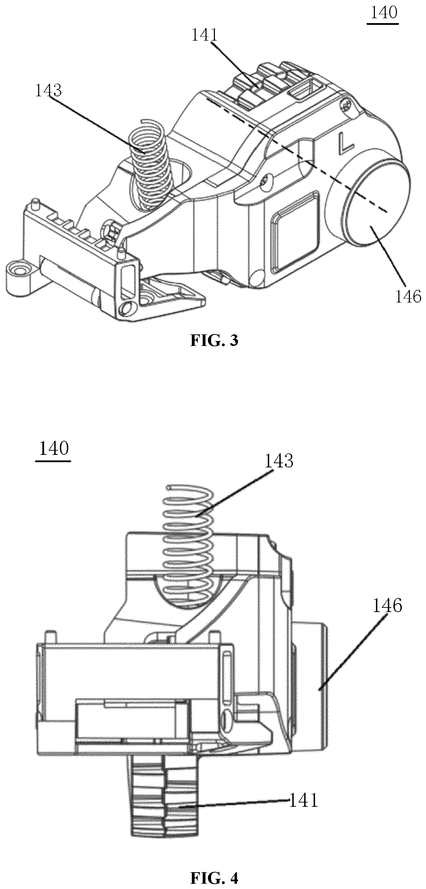

The driving system 140 may execute a driving command based on specific distance and angle information, such as x, y, and θ components, to manipulate the automatic cleaning apparatus to travel across the ground. FIG. 3 and FIG. 4 are a perspective view and a front view of a driving wheel assembly 141 on a side according to an embodiment of the present disclosure, respectively. As shown in the figures, the driving system 140 includes the driving wheel assembly 141, and may control a left wheel and a right wheel simultaneously. In order to control the motion of the automatic cleaning apparatus more precisely, the driving system 140 preferably includes a left driving wheel assembly and a right driving wheel assembly. The left driving wheel assembly and the right driving wheel assembly are arranged symmetrically along a transversal axis defined by the mobile platform 100. The driving wheel assembly includes a housing and a connecting rack. Each driving wheel assembly is provided with a driving motor 146. The driving motor 146 is located outside the driving wheel assembly 141, an axis center of the driving motor 146 is located within a sectional projection of the driving wheel, and the driving wheel assembly 141 may also be connected to a circuit for measuring a driving current and the odometer.

In order for the automatic cleaning apparatus to move on the ground more stably or have a stronger movement ability, the automatic cleaning apparatus may include one or more steering assemblies 142, wherein the steering assembly 142 may be a driven wheel or a driving wheel, and structurally includes but is not limited to a universal wheel. The steering assembly 142 may be located in front of the driving wheel assembly 141.

The driving motor 146 provides power for rotation of the driving wheel assembly 141 and/or the steering assembly 142.

The driving wheel assembly 141 may be detachably connected to the mobile platform 100 to facilitate assembly, disassembly and maintenance. The driving wheel may have an offset drop suspension system movably fastened, e.g., rotatably attached, to the mobile platform 100 of the automatic cleaning apparatus, and maintain contact and traction with the ground by an elastic element 143 such as a tension spring or a compression spring with a certain grounding force. Meanwhile, the cleaning module 150 of the automatic cleaning apparatus is also in contact with the surface to be cleaned with a certain pressure.

The energy system 160 includes a rechargeable battery, such as a nickel-hydride battery and a lithium battery. The rechargeable battery may be connected with a charging control circuit, a battery pack charging temperature detecting circuit and a battery undervoltage monitoring circuit, wherein the charging control circuit, the battery pack charging temperature detecting circuit and the battery undervoltage monitoring circuit are then connected to a single-chip microcomputer control circuit. A host of the automatic cleaning apparatus is connected to a charging dock through a charging electrode disposed on a side of or below a body of the automatic cleaning apparatus for charging.

The human-computer interaction system 170 includes buttons that are on a panel of the host and used by a user to select functions. The human-computer interaction system 170 may further include a display screen and/or an indicator light and/or a horn that present a current state or function item of the automatic cleaning apparatus to the user. The human-computer interaction system 170 may further include a mobile client program. For a route navigation type cleaning apparatus, a mobile client may present a map of the environment where the apparatus is located and a position of the apparatus to the user, which may provide richer and more user-friendly function items to the user.

The cleaning module 150 may include a dry cleaning module 151 and/or a wet cleaning module 400.

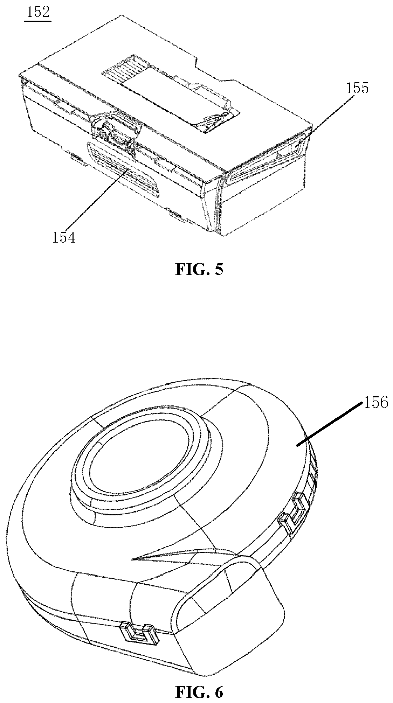

As shown in FIGs. 5-8, the dry cleaning module 151 includes a rolling brush, a dust box, a blower and an air outlet. The rolling brush having a certain interference with the ground sweeps up garbage on the ground and rolls up the garbage to the front of a dust suction inlet between the rolling brush and the dust box, and then the garbage is sucked into the dust box by air having a suction force, which is generated by the blower and passes through the dust box. A dust removal capacity of the sweeping robot may be characterized by a dust pickup efficiency (DPU) of the garbage. The DPU is affected by a structure and material of the rolling brush, by a utilization rate of the air in an air channel formed by the dust suction inlet, the dust box, the blower, the air outlet and connecting components between the four, and by a type and power of the blower, which is a complex systematic design problem. Compared to an ordinary plug-in vacuum cleaner, the improvement of the dust removal capacity is more meaningful for an automatic cleaning apparatus with limited energy because the improvement of the dust removal capacity directly and effectively reduces requirements for energy. For example, the cleaning apparatus that may originally clean 80 square meters of the ground on a single charge may be evolved to clean 180 square meters or more on a single charge. Furthermore, the service life of the battery with the reduced number of charging times will also be greatly increased, so that the frequency of replacing the battery by the user will also be decreased. More intuitively and importantly, the improvement of the dust removal capacity is the most obvious and important user experience, as the user will directly determine whether the thorough cleaning is achieved. The dry cleaning module may further include a side brush 157 having a rotary shaft angled relative to the ground, for moving debris into a region of the rolling brush of the cleaning module 150.

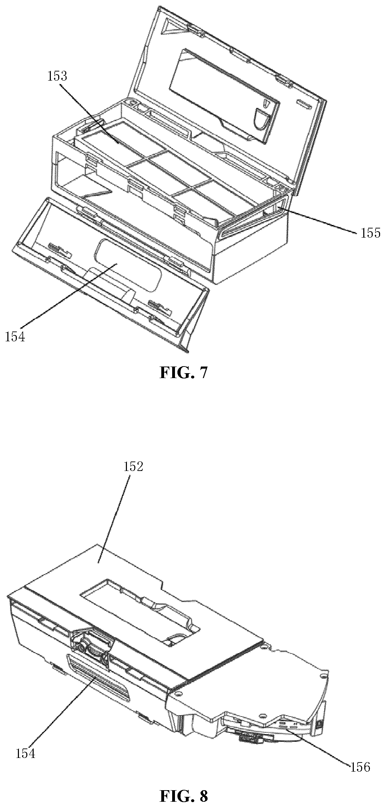

FIG. 5 is a schematic structural diagram of a dust box 152 in the dry cleaning module, FIG. 6 is a schematic structural diagram of a blower 156 in the dry cleaning module, FIG. 7 is a schematic diagram of the dust box 152 in an open state, and FIG. 8 is a schematic diagram of the dust box and the blower in an assembled state.

The rolling brush having a certain interference with the ground sweeps up garbage on the ground and rolls up the garbage to the front of the dust suction inlet 154 between the rolling brush and the dust box 152, and then the garbage is sucked into the dust box 152 by air having a suction force, which is generated by the blower 156 and passes through the dust box 152. The garbage is isolated inside the dust box 152 close to the dust suction inlet 154 by a filter screen 153, and the filter screen 153 completely isolates the dust suction inlet from the air outlet, so that the filtered air enters the blower 156 through the air outlet 155.

Typically, the dust suction inlet 154 of the dust box 152 is located in front of the automatic cleaning apparatus, the air outlet 155 is located on a side of the dust box 152, and an air suction inlet of the blower 156 is docked with the air outlet of the dust box.

A front panel of the dust box 152 may be opened for cleaning the garbage in the dust box 152.

The filter screen 153 is detachably connected to a body of the dust box 152 to facilitate assembling, disassembling and cleaning the filter screen.

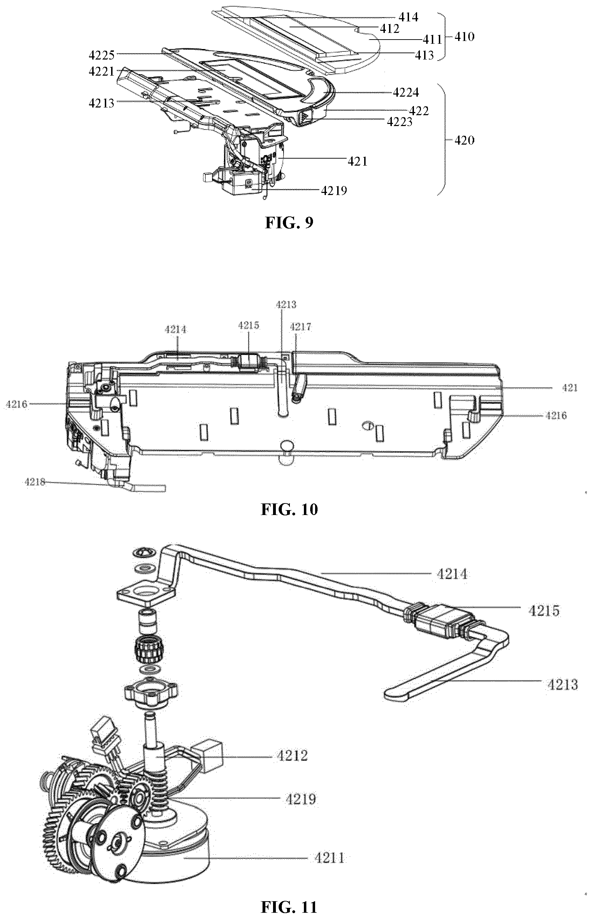

As shown in FIG. 9 to FIG. 11, the wet cleaning module 400 according to the present disclosure is configured to clean at least a part of the operating surface by means of wet cleaning. The wet cleaning module 400 includes a cleaning head 410 and a driving unit 420. The cleaning head 410 is used for cleaning at least a part of the operating surface, and the driving unit 420 is used for driving the cleaning head 410 to reciprocate along a target surface, the target surface being a part of the operating surface. The cleaning head 410 reciprocates along a surface to be cleaned, and a surface of the cleaning head 410 in contact with the surface to be cleaned is provided with a cleaning cloth or a cleaning plate, which generates a high-frequency friction with the surface to be cleaned through reciprocating motion, thereby removing stains on the surface to be cleaned. The reciprocating motion may be a repeated motion along any one or more directions within the operating surface, or may be a vibrating motion perpendicular to the operating surface, which is not strictly limited.

As shown in FIG. 9, the driving unit 420 includes: a driving platform 421 connected to a bottom surface of the mobile platform 100 for providing a driving force; and a supporting platform 422 detachably connected to the driving platform 421, for supporting the cleaning head 410 and being able to lift and lower under the driving of the driving platform 421.

A lifting and lowering module is provided between the cleaning module 150 and the mobile platform 100, so that the cleaning module 150 may be in better contact with the surface to be cleaned, or different cleaning strategies may be used for surfaces to be cleaned made of different materials.

The dry cleaning module 151 may be connected to the mobile platform 100 through a passive lifting and lowering module. When the cleaning apparatus encounters an obstacle, the dry cleaning module 151 may pass the obstacle more easily through the lifting and lowering module.

The wet cleaning module 400 may be connected to the mobile platform 100 through an active lifting and lowering module. When the wet cleaning module 400 does not participate in the operation temporarily, or when a surface to be cleaned cannot be cleaned by the wet cleaning module 400, the wet cleaning module 400 is lifted by the active lifting and lowering module and separated from the surface to be cleaned, so as to realize the change of cleaning modes.

As shown in FIG. 10 and FIG. 11, the driving platform 421 includes: a motor 4211 disposed on a side of the driving platform 421 close to the mobile platform 100 and used for outputting power through a motor output shaft; a driving wheel 4212 connected to the motor output shaft and having an asymmetric structure; and a vibrating member 4213 disposed on a side of the driving platform 421 opposite to the motor 4211 and connected to the driving wheel 4212 to reciprocate under the asymmetrical rotation of the driving wheel 4212.

The driving platform 421 may further include a driving wheel and a gear mechanism. The gear mechanism 235 may connect the motor 4211 and the driving wheel 4212. The motor 4211 may directly drive the driving wheel 4212 to swivel, or may indirectly drive the driving wheel 4212 to swivel through the gear mechanism. Those of ordinary skills in the art may understand that the gear mechanism may be one gear, or may be a gear set composed of a plurality of gears.

The motor 4211 simultaneously transmits, through a power transmission device, power to the cleaning head 410, the driving platform 421, the supporting platform 422, a water delivery mechanism, a water tank, and the like. The energy system 160 provides power and energy for the motor 4211 and is entirely controlled by the control system 130. The power transmission device may be a gear drive, a chain drive, a belt drive, a worm gear, or the like.

The motor 4211 has a forward output mode and a reverse output mode. In the forward output mode, the motor 4211 rotates in the forward direction; and in the reverse output mode, the motor 4211 rotates in the reverse direction. In the forward output mode of the motor 4211, the motor 4211 simultaneously drives, through the power transmission device, the cleaning head 410 in the wet cleaning assembly 400 and the water delivery mechanism to move synchronously.

Further, the driving platform 421 further includes a connecting rod 4214 extending along an edge of the driving platform 421 and connecting the driving wheel 4212 and the vibrating member 4213, so that the vibrating member 4213 extends to a preset position. An extension direction of the vibrating member 4213 is perpendicular to the connecting rod 4214.

The motor 4211 is connected to the driving wheel 4212, the vibrating member 4213, the connecting rod 4214 and a vibration buffering device 4215 through the power transmission device. When the wet cleaning assembly 400 is activated, the motor 4211 is started to rotate forward to drive the connecting rod 4214 through the driving wheel 4212 to reciprocate along the surface of the driving platform 421. Meanwhile, the vibration buffering device 4215 drives the vibrating member 4213 to reciprocate along the surface of the driving platform 421, the vibrating member 4213 drives a cleaning substrate 4221 to reciprocate along the surface of the supporting platform 422, and the cleaning substrate 4221 drives a movable region 412 to reciprocate along the surface to be cleaned. At this time, a clean water pump enables clean water to flow out of a clean water tank and sprinkles the clean water on the cleaning head 410 through a water discharging device 4217, and the cleaning head 410 reciprocates to clean the surface to be cleaned.

The cleaning intensity/efficiency of the automatic cleaning apparatus may also be automatically and dynamically adjusted according to an operation environment of the automatic cleaning apparatus. For example, the automatic cleaning apparatus may achieve dynamic adjustment according to physical information of the surface to be cleaned detected by the perception system 120. For example, the perception system 120 may detect the flatness of the surface to be cleaned, a material of the surface to be cleaned, the existence of oil and dust, and other information, and transmit the information to the control system 130 of the automatic cleaning apparatus. Correspondingly, the control system 130 may instruct the automatic cleaning apparatus to automatically and dynamically adjust a rotational speed of the motor and a transmission ratio of the power transmission device according to the operation environment of the automatic cleaning apparatus, so as to adjust a preset reciprocating period of the reciprocating motion of the cleaning head 410.

For example, when the automatic cleaning apparatus operates on a flat ground, the preset reciprocating period may be automatically and dynamically adjusted to be longer, and a water volume of the water pump may be automatically and dynamically adjusted to be smaller; and when the automatic cleaning apparatus operates on a less flat ground, the preset reciprocating period may be automatically and dynamically adjusted to be shorter, and the water volume of the water pump may be automatically and dynamically adjusted to be larger. This is because it is easier to clean the flat ground than the less flat ground, and thus the reciprocating motion of the cleaning head 410 at a higher speed (i.e., a higher frequency) and in the larger water volume are needed for cleaning an uneven ground.

For another example, when the automatic cleaning apparatus operates on a table, the preset reciprocating period may be automatically and dynamically adjusted to be longer, and the water volume of the water pump may be automatically and dynamically adjusted to be smaller; and when the automatic cleaning apparatus 100 operates on a ground, the preset reciprocating period may be automatically and dynamically adjusted to be shorter, and the water volume of the water pump may be automatically and dynamically adjusted to be larger. This is because the table has less dust and oil compared to the ground, the material of the table is also easier to clean, and thus, the table can be cleaned with the fewer number of reciprocating motions of the cleaning head 410 and the relatively smaller water volume of the water pump.

The supporting platform 422 includes a cleaning substrate 4221 movably disposed on the supporting platform 422 and reciprocating under the vibration of the vibrating member 4213. Optionally, the cleaning substrate 4221 includes an assembly notch (not shown) disposed at a position in contact with the vibrating member 4213. When the supporting platform 422 is connected to the driving platform 421, the vibrating member 4213 is assembled to the assembly notch, so that the cleaning substrate 4221 may reciprocate synchronously along with the vibrating member 4213.

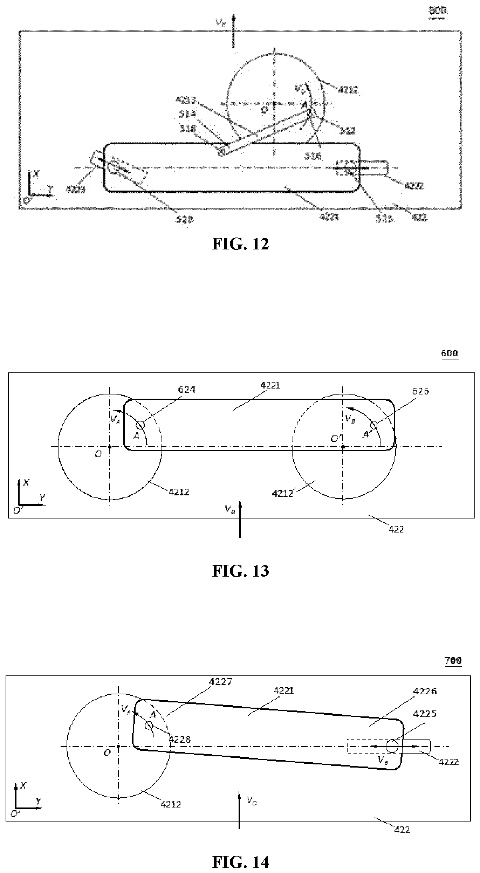

FIG. 12 shows another cleaning head driving mechanism 800 based on a crank slider mechanism according to a plurality of embodiments of the present disclosure. The driving mechanism 800 may be applied to the driving platform 421. The driving mechanism 800 includes a driving wheel 4212, a vibrating member 4213, a cleaning substrate 4221, a sliding slot 4222 (a first sliding slot) and a sliding slot 4223 (a second sliding slot).

The sliding slots 4222 and 4223 are formed in the supporting platform 422. Both ends of the cleaning substrate 4221 include a slider 525 (a first slider) and a slider 528 (a second slider), respectively. Each of the sliders 525 and 528 is a protrusion at each of both ends of the cleaning substrate 4221. The slider 525 is inserted into the sliding slot 4222 and may slide along the sliding slot 4222, and the slider 528 is inserted into the sliding slot 4223 and may slide along the sliding slot 4223. In some embodiments, the sliding slot 4222 and the sliding slot 4223 are on the same line. In some embodiments, the sliding slot 4222 and the sliding slot 4223 are not on the same line. In some embodiments, the sliding slot 4222 and the sliding slot 4223 extend along the same direction. In some embodiments, an extension direction of the sliding slot 4222 and an extension direction of the sliding slot 4223 are the same as that of the cleaning substrate 4221. In some embodiments, the extension direction of the sliding slot 4222 and the extension direction of the sliding slot 4223 are different from that of the cleaning substrate 4221. In some embodiments, the extension direction of the sliding slot 4222 is different from that of the sliding slot 4223. For example, as shown in FIG. 12, the extension direction of the sliding slot 4222 is the same as that of the cleaning substrate 4221, and the extension direction of the sliding slot 4223 is at a certain angle with that of the sliding slot 4222.

The vibrating member 4213 includes a swiveling end 512 and a sliding end 514. The swiveling end 512 is connected to the driving wheel 4212 through a first pivot 516, and the sliding end 514 is connected to the cleaning substrate 4221 through a second pivot 518.

A swiveling center of the driving wheel 4212 is a point O, and a pivoting center of the first pivot 516 is a point A. The point O and the point A do not coincide, and a distance between the point O and the point A is a preset distance d.

When the driving wheel 4212 rotates, the point A also swivels along a circular path. Correspondingly, the swiveling end 512 follows the point A to swivel along the circular path, and the sliding end 514 drives the cleaning substrate 4221 to slide through the second pivot 518. Correspondingly, the slider 525 of the cleaning substrate 4221 linearly reciprocates along the sliding slot 4222, and the slider 528 linearly reciprocates along the sliding slot 4223. In FIG. 4, a moving speed of the mobile platform 100 is V0, and a moving direction thereof is a target direction. According to some embodiments, when the sliding slot 4223 and the sliding slot 4222 are approximately perpendicular to the direction of the moving speed V0 of the mobile platform 100 respectively, an overall displacement of the cleaning substrate 4221 is substantially perpendicular to the target direction. According to some other embodiments, when any one of the sliding slot 4223 and the sliding slot 4222 forms an angle other than 90 degrees with the target direction, the overall displacement of the cleaning substrate 4221 includes both a component perpendicular to the target direction and a component parallel to the target direction.

Further, a vibration buffering device 4215 is included, which is disposed on the connecting rod 4214 and used for reducing vibration in a specific direction. In this embodiment, the vibration buffering device 4215 is used for reducing the vibration in a direction of a movement component perpendicular to the target direction of the automatic cleaning apparatus.

FIG. 13 shows another cleaning head driving mechanism 600 based on a double-crank mechanism according to a plurality of embodiments of the present disclosure. The driving mechanism 600 may be applied to the driving platform 421. The driving mechanism 600 includes a driving wheel 4212 (a first driving wheel), a driving wheel 4212' (a second driving wheel) and a cleaning substrate 4221.

The cleaning substrate 4221 has two ends, a first end thereof is connected to the driving wheel 4212 through a pivot 624 (a first pivot), and a second end thereof is connected to the driving wheel 4212' through a pivot 626 (a second pivot). A swiveling center of the driving wheel 4212 is a point O, and a pivoting center of the pivot 624 is a point A. The point O and the point A do not coincide, and a distance between the point O and the point A is a preset distance d. A swiveling center of the driving wheel 236 is a point O', and a pivoting center of the pivot 626 is point A'. The point O' and the point A' do not coincide, and a distance between the point O' and the point A' is a preset distance d. In some embodiments, the point A, the point A', the point O, and the point O' are located on the same plane. Therefore, the driving wheel 4212, the driving wheel 4212' and the cleaning substrate 4221 may form a double-crank mechanism (or a parallelogram mechanism), wherein the cleaning substrate 4221 acts as a coupling lever, and the driving wheels 4212 and 4212' act as two cranks.

Further, a vibration buffering device 4215 is included, which is disposed on the connecting rod 4214 and used for reducing vibration in a specific direction. In this embodiment, the vibration buffering device 4215 is used for reducing the vibration in a direction of a movement component perpendicular to the target direction of the automatic cleaning apparatus.

FIG. 14 shows a driving mechanism 700 based on a crank slider mechanism according to a plurality of embodiments of the present disclosure. The driving mechanism 700 may be applied to the driving platform 421. The driving mechanism 700 includes a driving wheel 4212, a cleaning substrate 4221 and a sliding slot 4222.

The sliding slot 4222 is formed in the supporting platform 422. The cleaning substrate 4221 includes a swiveling end 4227 and a sliding end 4226. The swiveling end 4227 is connected to the driving wheel 4212 through a pivot 4228. A swiveling center of the driving wheel 4212 is a point O, and a pivoting center of the pivot 4228 of the swiveling end is a point A. The point O and the point A do not coincide, and a distance between the point O and the point A is a preset distance d. The sliding end 4226 includes a slider 4225. The slider 4225 is a protrusion on the sliding end 4226. The slider 4225 is inserted into the sliding slot 4222 and may slide along the sliding slot 4222. Therefore, the driving wheel 4212, the cleaning substrate 4221, the slider 4225 and the sliding slot 4222 constitute the crank slider mechanism.

When the driving wheel 4212 rotates, the point A swivels along a circular path. Correspondingly, the swiveling end 4227 of the cleaning substrate 4221 follows the point A to swivel along the circular path, and the slider 4225 also slides in the sliding slot 4222 and reciprocates linearly. As a result, the cleaning substrate 4221 starts to reciprocate. According to some embodiments, the sliding slot 4222 is approximately perpendicular to a direction of the target direction of the moving speed of the mobile platform. Therefore, the linear motion of the sliding end 4226 includes a component perpendicular to the target direction, and the circular swiveling motion of the swiveling end 4227 includes both a component perpendicular to the target direction and a component parallel to the target direction.

In FIG. 14, a moving speed of the mobile platform is V0, and a moving direction thereof is a target direction, and the sliding slot 4222 is approximately perpendicular to the target direction. At this time, the reciprocating motion of the cleaning substrate 4221 as a whole includes both a movement component parallel to the target direction of the automatic cleaning apparatus and a movement component perpendicular to the target direction of the automatic cleaning apparatus.

Further, a vibration buffering device 4215 is included, which is disposed on the connecting rod 4214 and used for reducing vibration in a specific direction. In this embodiment, the vibration buffering device 4215 is used for reducing the vibration in a direction of a movement component perpendicular to the target direction of the automatic cleaning apparatus.

Further, the supporting platform 422 further includes an elastic detaching button 4229 disposed on at least one side of the supporting platform 422 for detachably connecting the supporting platform 422 to pawls 4216 of the driving platform 421. At least one assembly region 4224 is disposed on the supporting platform 422 for assembling the cleaning head 410. The assembly region 4224 may be formed of an adhesive material with an adhesive layer.

As shown in FIG. 9, the cleaning head 410 includes a movable region 412 connected to the cleaning substrate 4221 to reciprocate along the surface to be cleaned under the driving of the cleaning substrate 4221. The movable region 412 is disposed at a substantially central position of the cleaning head 410. An adhesive layer is provided on a side of the movable region 412 connected to the cleaning substrate 4221, and the movable region 412 is connected to the cleaning substrate 4221 through the adhesive layer.

Optionally, the cleaning head 410 further includes a fixed region 411 connected to a bottom of the supporting platform 422 through the at least one assembly region 4224. The fixed region 411 cleans at least a part of the operating surface along with the movement of the supporting platform 422.

Further, the cleaning head 410 further includes a flexible connecting portion 413 disposed between the fixed region 411 and the movable region 412 for connecting the fixed region 411 and the movable region 412. The cleaning head 410 further includes a sliding fastener 414 extending along an edge of the cleaning head 410 and detachably mounted at an engagement position 4225 of the supporting platform 422.

As shown in FIG. 9, the cleaning head 410 may be made of a material with certain elasticity, and is fixed to the surface of the supporting platform 422 through the adhesive layer so as to reciprocate. The cleaning head 410 is always in contact with the surface to be cleaned during operation.

The water delivery mechanism includes a water discharging device 4217 that may be directly or indirectly connected to a cleaning liquid outlet of a water tank (not shown), that is, a liquid outlet of the clean water tank. The cleaning liquid may flow to the water discharging device 4217 via the cleaning liquid outlet of the water tank, and may be evenly coated on the surface to be cleaned through the water discharging device. A connecting member (not shown) may be provided on the water discharging device, and the water discharging device is connected to the cleaning liquid outlet of the water tank through the connecting member. The water discharging device is provided with a distribution port which may be a continuous opening or a combination of several discontinuous small openings, and several nozzles may be provided at the distribution port. The cleaning liquid flows to the distribution port via the cleaning liquid outlet of the water tank and the connecting member of the water discharging device, and is evenly coated on the operating surface via the distribution port.

The water delivery mechanism may further include a clean water pump 4219 and/or a clean water pump pipe 4218. The clean water pump 4219 may be communicated with the cleaning liquid outlet of the water tank directly, or communicated with the cleaning liquid outlet of the water tank through the clean water pump pipe 4218.

The clean water pump 4219 may be connected to the connecting member of the water discharging device, and configured to pump the cleaning liquid from the water tank to the water discharging device. The clean water pump may be a gear pump, a vane pump, a plunger pump, a peristaltic pump, or the like.

The water delivery mechanism draws the cleaning liquid out of the clean water tank through the clean water pump 4219 and the clean water pump pipe 4218, and transports the cleaning liquid to the water discharging device. The water discharging device 4217 may be a sprinkler head, a drip hole, a wet cloth, or the like, and may uniformly spread water on the cleaning head so as to wet the cleaning head and the surface to be cleaned. Stains on the wetted surface to be cleaned can be cleaned more easily. In the wet cleaning assembly 400, the power/flow rate of the clean water pump may be adjusted.

By adding the driving unit and the vibration region to the wet cleaning module, the cleaning head may reciprocate to repeatedly clean the surface to be cleaned. Therefore, in a movement trajectory of the automatic cleaning apparatus, a region may be cleaned several times by the automatic cleaning apparatus passing the region just one time, thereby greatly enhancing the cleaning effect. The cleaning effect is obvious especially for a region with more stains.

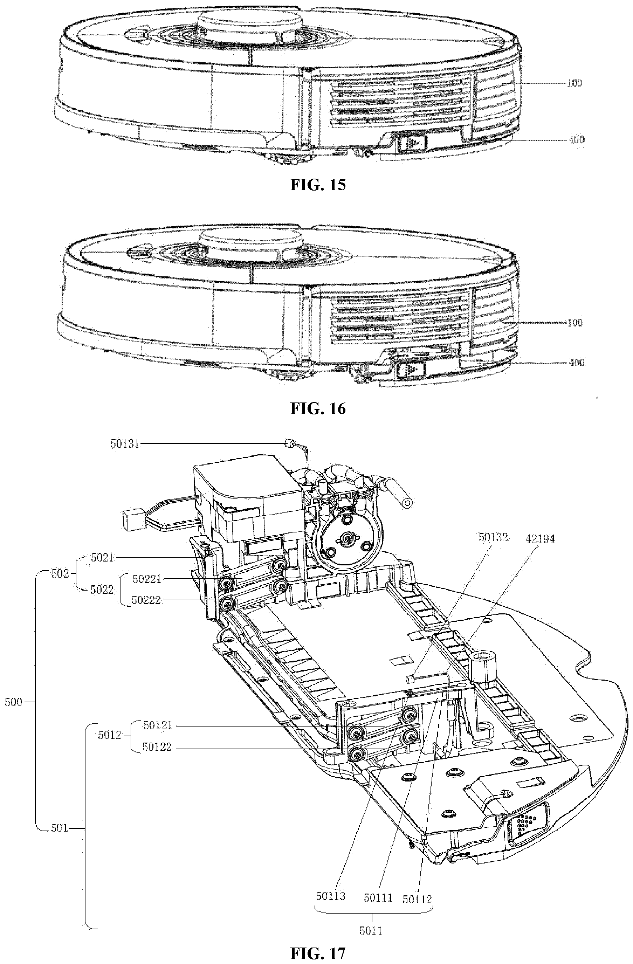

According to specific embodiments of the present disclosure, the present disclosure provides a liftable automatic cleaning apparatus, including: a mobile platform 100 configured to move automatically on an operating surface; and a wet cleaning module 400, movably connected to the mobile platform 100 through a four-link lifting and lowering structure 500, and configured to clean at least a part of the operating surface by means of wet cleaning. The four-link lifting and lowering structure 500 is of a parallelogram structure for switching the wet cleaning module 400 between a lifting state and a lowering state. In the lifting state, the wet cleaning module 400 escapes from the operating surface, as shown in FIG. 15; and in the lowering state, the wet cleaning module 400 is attached to the operating surface, as shown in FIG. 16.

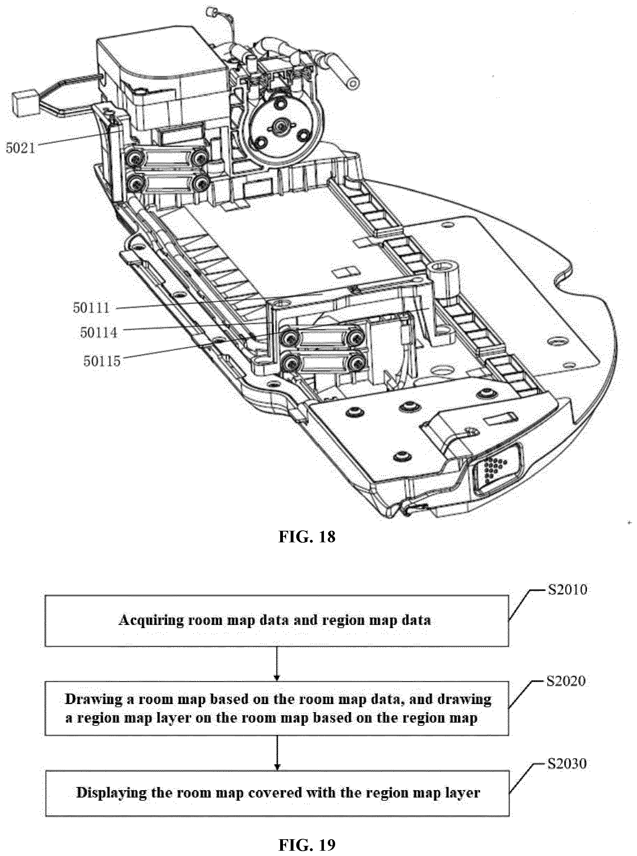

As shown in FIG. 17 and FIG. 18, the four-link lifting and lowering structure 500 includes: a first connecting end 501 for providing active power to switch the wet cleaning module 400 between the lifting state and the lowering state; and a second connecting end 502 disposed opposite to the first connecting end 501 and rotating under the action of the active power. The first connecting end 501 and the second connecting end 502 are located on both sides of the wet cleaning module 400 respectively to lift or lower the wet cleaning module 400 by stably providing a lifting or lowering force.

Specifically, the first connecting end 501 includes a first bracket 5011 fixedly connected to the bottom of the mobile platform 100. The first bracket 5011 is roughly shaped like a character "Q", and includes a cross beam 50111, a first longitudinal beam 50114 and a second longitudinal beam 50115. A tail end of each of the first longitudinal beam 50114 and the second longitudinal beam 50115 is fixedly connected to the mobile platform 100 through a bolt to provide a supporting force when the wet cleaning module 400 is lifted and lowered.

The first connecting end 501 further includes a first connecting rod pair 5012, one end of which is rotatably connected to the first bracket 5011, and the other end of which is rotatably connected to the wet cleaning module 400. The first connecting rod pair 5012 may be of a hollowed-out structure, which can reduce an overall weight of lifting and lowering ends.

Optionally, the first connecting rod pair 5012 includes a first connecting rod 50121 and a second connecting rod 50122 which are arranged in parallel. A first end of each of the first connecting rod 50121 and the second connecting rod 50122 is rotatably connected to the first longitudinal beam 50114 through a movable stud, and a second end of each of the first connecting rod 50121 and the second connecting rod 50122 is rotatably connected to the wet cleaning module 400 through a movable stud. For example, both ends of each of the first connecting rod 50121 and the second connecting rod 50122 are provided with a through hole having a diameter greater than that of the movable stud, respectively, so that the movable stud may rotate freely within the through hole, and is fixedly connected to the first longitudinal beam 50114 after passing through the through hole. When the motor 4211 provides a pulling force to the first ends through the cable, the first ends of the first connecting rod 50121 and the second connecting rod 50122 simultaneously rotate around the movable studs at the first ends, and the second ends thereof are lifted under the pulling force of the cable, so that the wet cleaning module 400 is lifted. When the motor 4211 releases the pulling force to the first ends through the cable, the first ends of the first connecting rod 50121 and the second connecting rod 50122 simultaneously rotate reversely around the movable studs at the first ends, and the second ends thereof are lowered under the action of gravity, so that the wet cleaning module 400 is lowered.

The lifting and lowering structure 500 further includes a cable 42194 for providing a pulling force to rotate the first connecting rod pair 5012 within a preset angle. The cable 42194 includes a cable motor terminal 50131 connected to the driving unit 420, for example, wound on the gear connected to the motor output shaft to extend and retract under the rotation of the motor; and a cable bracket terminal 50132 connected to the first bracket 5011. The motor lifts or lowers the second ends of the first connecting rod 50121 and the second connecting rod 50122 through the cable 42194.

Optionally, the first bracket 5011 further includes: a sliding slot 50112 extending along a surface of the cross beam 50111; and a snapping hole 50113 running through the cross beam 50111 and formed in an extension end of the sliding slot 50112 for accommodating and snapping the cable bracket terminal 50132. The cable 42194 is connected to the first ends of the first connecting rod 50121 and the second connecting rod 50122 through the sliding slot 50112 and the snapping hole 50113. The sliding slot 50112 can restrict a moving direction of the cable to ensure the stability of the lifting and lowering module, and the width of the sliding slot should match the thickness of the cable.

As shown in FIG. 17, the second connecting end 502 includes: a second bracket 5021 fixedly connected to the bottom of the mobile platform 100; and a second connecting rod pair 5022, one end of which is rotatably connected to the second bracket 5021, and the other end of which is rotatably connected to the wet cleaning module 400. The second connecting rod pair 5022 rotates along with the rotation of the first connecting rod pair 5012. The second connecting rod pair 5022 may be of a hollowed-out structure, which can reduce the overall weight of lifting and lowering ends.

Specifically, the second connecting rod pair 5022 includes a third connecting rod 50221 and a fourth connecting rod 50222 which are arranged in parallel. A first end of each of the third connecting rod 50221 and the fourth connecting rod 50222 is rotatably connected to the second bracket 5021 through a movable stud, and a second end of each of the third connecting rod 50221 and the fourth connecting rod 50222 is rotatably connected to the wet cleaning module 400 through a movable stud. For example, both ends of each of the third connecting rod 50221 and the fourth connecting rod 50222 are provided with a through hole having a diameter greater than that of the movable stud, respectively, so that the movable stud may rotate freely within the through hole, and is fixedly connected to the second bracket 5021 and the wet cleaning module 400 through the through hole. When the first connecting end 501 rotates under the driving of the motor 4211, the first ends of the third connecting rod 50221 and the fourth connecting rod 50222 simultaneously rotate around the movable studs at the first ends, and the second ends of the third connecting rod 50221 and the fourth connecting rod 50222 simultaneously rotate around the movable studs at the second ends, so that the wet cleaning module 400 is lifted. When the pulling force to the first connecting end 501 is released, the first ends of the third connecting rod 50221 and the fourth connecting rod 50222 simultaneously rotate reversely around the movable studs at the first ends, and the second ends thereof are lowered under the action of gravity, so that the wet cleaning module 400 is lowered.

Through the four-link lifting and lowering structure disposed between the wet cleaning module and the mobile platform, the wet cleaning module may be lifted and lowered relative to the mobile platform. When a ground mopping task is performed, the wet cleaning module is lowered to enable the wet cleaning module to be in contact with the ground; and when the ground mopping task is completed, the wet cleaning module is lifted to separate the wet cleaning module from the ground, thereby avoiding the increased resistance due to the existence of the cleaning module when the cleaning apparatus moves freely on the surface to be cleaned.

In cooperation with a surface medium sensor and other sensors that can detect a surface type of the surface to be cleaned, the lifting and lowering module enables the wet cleaning module to perform a cleaning operation according to different surfaces to be cleaned. For example, the lifting and lowering module lifts the wet cleaning module in case of a carpet surface, and lowers the wet cleaning module in case of a floor surface, a floor tile surface or the like, for cleaning. Thus, a more comprehensive cleaning effect is achieved.

With the intelligentization of automatic cleaning apparatuses, controlling an automatic cleaning apparatus by using a user equipment has become a trend. In a process of controlling the automatic cleaning apparatus by using the user equipment, how to set and send different cleaning instructions according to specific conditions of a room has become a new user demand. The user equipment may be a personal computer, a tablet computer, or a hand-held terminal device.

Generally, furniture such as a table, a chair, and a bed is arranged inside a room to be cleaned; and there may even be a carpet arranged in the room. For an automatic cleaning apparatus that does not need to clean a carpet, the carpet and the furniture are generally regarded as obstacles by default, and are merely marked as obstacles or not marked in a map displayed to a user. In this case, when the user wants to control the automatic cleaning apparatus to clean the carpet, it is impossible to give an instruction for controlling the automatic cleaning apparatus. This leads to poor user experience.

On this basis, an exemplary embodiment of the present disclosure provides a map display method. As shown in FIG. 19, the map display method may include the following steps: S2010, acquiring room map data and region map data; S2020, drawing a room map based on the room map data, and drawing a region map layer on the room map based on the region map data; and S2030, displaying the room map covered with the region map layer.

The map display method provided in this exemplary embodiment of the present disclosure is applied to a user equipment interacting with an automatic cleaning apparatus. After the user equipment acquires room map data and region map data that are sent by the automatic cleaning apparatus, a region map layer may be drawn, based on the region map data, on a room map that is generated based on the room map data, so that the room map covered with the region map layer may be obtained, and the room map may be displayed by the user equipment. In other words, when the room map is displayed on the user equipment, the region map layer is also displayed on the room map. This can help a user more accurately locate and control a cleaned region of the automatic cleaning apparatus.

For example, when the region map layer is a carpet layer, the user can control, based on the room map provided with the carpet layer and displayed on the user equipment, the automatic cleaning apparatus to clean a carpet. Especially, if there is a plurality of carpets in a room, according to the map display method provided in this exemplary embodiment of the present disclosure, the user can even control the automatic cleaning apparatus to clean only some of the carpets, thereby improving operability, intelligent control of the automatic cleaning apparatus, and user experience.

It should be noted that, the automatic cleaning apparatus may send the room map data and the region map data to the user equipment upon responding to user's carpet operation instruction or upon acquisition of the room map data and the region map data. This is not particularly limited in this exemplary embodiment of the present disclosure.

The room map data acquired by the automatic cleaning apparatus usually includes room boundary coordinate data; and the region map data acquired by the automatic cleaning apparatus usually includes region boundary coordinate data. Both the room boundary coordinate data and the region boundary coordinate data are obtained by the automatic cleaning apparatus in a boundary scanning process based on a minimum identification unit of the automatic cleaning apparatus. The minimum identification unit is usually a coordinate point, that is, both the room boundary coordinate data and the region boundary coordinate data are composed of boundary coordinate points.

In actual applications, the room boundary coordinate data may be obtained by the automatic cleaning apparatus in a process of cleaning along a wall, while the region boundary coordinate data may be obtained by the automatic cleaning apparatus in a process of scanning along a region boundary, for example, scanning along an outer edge of a carpet boundary.

In an exemplary embodiment of the present disclosure, the drawing the room map based on the room map data includes: first determining a shape of a room map layer based on the room boundary coordinate data, to ensure that the determined shape of the room map layer matches an actual room map shape; and drawing the room map on the room map layer.

Determining the shape of the room map layer based on the room boundary coordinate data may include: determining a shape of a room boundary based on the room boundary coordinate data, and then determining the shape of the room map layer based on the shape of the room boundary. A common shape of room map layers can be a square or the like. This is not limited in exemplary embodiments of the present disclosure.

After determining the shape of the room map layer, it may also be necessary to determine a size of the room map layer. A room map layer that has the same size as a region enclosed by the room boundary or a room map layer that is larger or smaller than the region enclosed by the room boundary may be used based on an actual condition. This is not particularly limited in this exemplary embodiment of the present disclosure.

It should be noted that when the room boundary coordinate data is drawn on a room map layer that is smaller than the region enclosed by the room boundary, the room boundary coordinate data needs to be reduced by a fixed scale as needed, so that room boundary coordinate points corresponding to the room boundary coordinate data can be drawn on the room map layer. A specific reduction scale may be determined depending on an actual condition, and is not limited herein.

In an exemplary embodiment of the present disclosure, the room boundary coordinate data may be drawn on the room map layer one by one upon acquisition of the room map layer, thereby obtaining the room map.

After the room map is drawn, the region map layer is to be drawn on the room map in such a manner that the region map layer covers and is within the room map, so that a room map containing a region map can be obtained. By displaying the room map on the user equipment, the user can control, according to his/her own needs, the automatic cleaning apparatus to clean a specified region. Therefore, diversified needs of users are met.

In an exemplary embodiment of the present disclosure, the drawing the region map layer on the room map may specifically include: drawing the region map layer on the room map based on the region map data. Because the room map data and the region map data are in the same two-dimensional space, a position relationship between the room map and the region map layer can be determined based on the room map data and the region map data. The position relationship indicates relative positions between the room map and the region map layer.

The region map layer can be drawn on the room map based on the position relationship, namely, the relative positions between the room map and the region map layer, so as to obtain the room map covered with the region map layer.

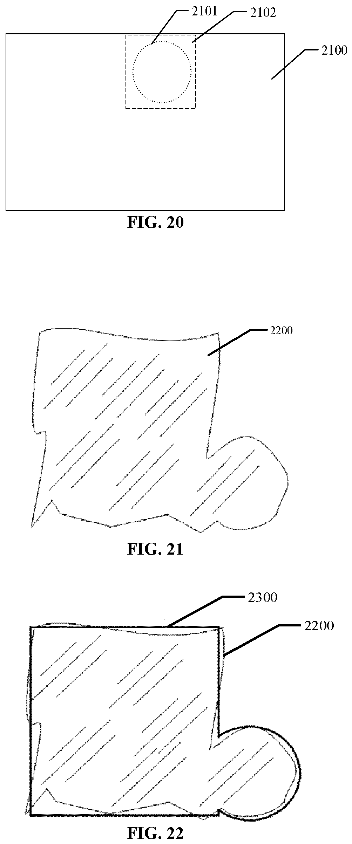

In an exemplary embodiment of the present disclosure, drawing the region map layer on the room map based on the position relationship may be: directly drawing the region map layer at a corresponding position; or demarcating a sub-region 2102 corresponding to the region map layer 2101 from the room map 2100 shown in FIG. 20, and drawing the region map layer 2101 on the sub-region 2102. A calculation amount of data can be reduced by drawing the room map layer 2101 on the sub-region 2102, thereby improving the drawing efficiency.

In addition, a process of drawing the region map layer 2101 on the sub-region 2102 may alternatively include: magnifying the sub-region 2102 by a preset scale, and drawing units corresponding to the region map data on the magnified sub-region 2102 to obtain the region map layer 2101. The corresponding units may be point units or linear units. The region map layer 2101 can be obtained by drawing these point units or linear units on the magnified sub-region 2102 one by one.

However, if distances between the drawn point units are large, these point units may be further connected in sequence to obtain the region map layer 2101.

Locating accuracy of the point units or the linear units can be improved by drawing the region map layer 2101 on the magnified sub-region 2102, so that the drawn region map layer 2101 is closer to an actual condition. A drawing process may also be displayed on the user equipment to improve user experience. Moreover, in a process of magnifying the sub-region 2102, there is no need to magnify other regions, so that the calculation amount of data is further reduced to improve the drawing efficiency.

After the region map layer 2101 is obtained, size restoration may be performed on the magnified sub-region 2102, and the obtained sub-region 2102 may be merged into the room map 2100, so that the room map 2100 can be covered with the region map layer 2101 to obtain and display, on the user equipment, the room map 2100 with the region map layer 2101.

In a process of demarcating the sub-region 2102, an area of the demarcated sub-region 2102 may need to be greater than an area of the region map layer 2101, so that the region map layer 2101 is drawn within the sub-region 2102 to avoid omission of region map data.

In actual applications, a shape of the sub-region 2102 may be determined based on an actual condition. In an exemplary embodiment of the present disclosure, the shape of the sub-region 2102 is determined as a rectangle. For example, the sub-region 2102 may be composed of rectangular arrays.

Alternatively, in an exemplary embodiment of the present disclosure, the room map is divided into a plurality of sub-regions; a sub-region where the region map layer is located is determined based on the position relationship between the room map and the region map layer; and the above step of drawing the region map layer is performed on the sub-region. Details are not described herein again.

In an exemplary embodiment of the present disclosure, a process of acquiring the room map data by the automatic cleaning apparatus may include: scanning boundaries of a room along walls to acquire the room map data.

A process of acquiring the region map data by the automatic cleaning apparatus may include: scanning a boundary of a surface medium region, for example, a carpet region in the room to generate an initialization region.

Specifically, a surface medium region identification device may be used to scan the boundary of the surface medium region. For example, a carpet identification device 103 is used to scan a boundary of a carpet region. After scanning, an initialization region 2200 shown in FIG. 21 may be generated based on the scanned boundary, and the initialization region 2200 may be recorded in the automatic cleaning apparatus.

Then, boundary coordinates of the initialization region 2200 may be combined. For example, adjacent boundary coordinates may be combined into one coordinate. For another example, an average value of adjacent boundary coordinates is taken to obtain a combined region 2300 shown in FIG. 22 whose boundary is smoother than that of the initialization region 2200. At this time, boundary data corresponding to the combined region 2300 may be stored in the automatic cleaning apparatus as the region map data, so as to be sent to the user equipment.

It should be noted that although the steps of the method in the present disclosure are described in the accompanying drawings in a particular sequence, it is not required or implied that the steps must be performed in that particular sequence or that all of the steps shown must be performed to achieve the desired results. Additionally or alternatively, some steps may be omitted, a plurality of steps may be combined and performed as one step, and/or one step may be split and performed as a plurality of steps, and so on.

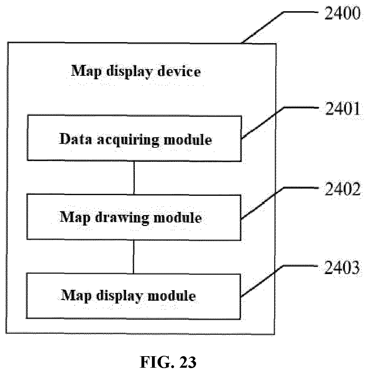

An exemplary embodiment of the present disclosure further provides a map display device, disposed in a user equipment. As shown in FIG. 23, the map display device 2400 may include a data acquiring module 2401, a map drawing module 2402, and a map display module 2403.

The data acquiring module 2401 is configured to acquire room map data and region map data.

The map drawing module 2402 is configured to draw a room map based on the room map data, and draw a region map layer on the room map based on the region map data.

The map display module 2403 is configured to display the room map covered with the region map layer.

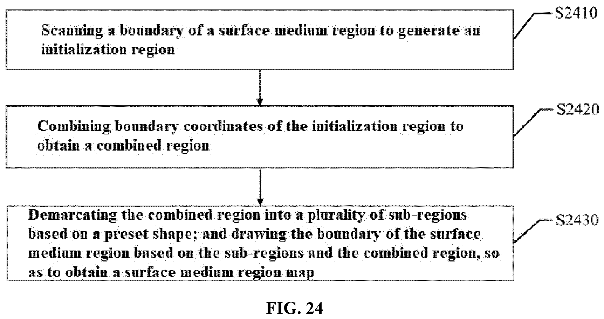

On this basis, an exemplary embodiment of the present disclosure provides a map drawing method. As shown in FIG. 24, the map drawing method may include the following steps: S2410, scanning a boundary of a surface medium region to generate an initialization region; S2420, combining boundary coordinates of the initialization region to obtain a combined region; and S2430, dividing the combined region into a plurality of sub-regions based on a preset shape; and drawing the boundary of the surface medium region based on the sub-regions and the combined region, so as to obtain a surface medium region map.

The map drawing method provided in the exemplary embodiment of the present disclosure includes the following steps: scanning a boundary of a surface medium region; generating an initialization region; obtaining a smooth combined region based on the initialization region; and drawing the boundary of the surface medium region based on combination of sub-regions and the combined region. In this way, a surface medium region map can be drawn. A boundary of the obtained surface medium region map is smooth, so that the surface medium region map is more accurate. This helps an automatic cleaning apparatus subsequently clean and locate the surface medium region or an edge region of the surface medium region.

It should be noted that, the above map drawing method may be used for not only drawing a single surface medium region map, but also drawing a map in which a second surface medium region is located in a first surface medium region. Herein, a first surface medium is one or more of floor surface medium such as a wooden floor, a carpet, a ceramic tile, and a cement surface; and a second surface medium is one or more of floor surface medium such as a wooden floor, a carpet, a ceramic tile, and a cement surface and is different from the first surface medium.

When the automatic cleaning apparatus performs cleaning in the first surface medium region, for example, when the automatic cleaning apparatus performs cleaning along a wall, a position of the second surface medium region is recorded upon detection of the second surface medium region by a surface medium sensor 103 of the automatic cleaning apparatus. Then, the automatic cleaning apparatus will activate a surface medium region drawing module to draw a second surface medium region map for subsequent reference and invoking.

In an exemplary embodiment of the present disclosure, the scanning the boundary of the surface medium region to draw the surface medium region map includes: scanning the boundary of the surface medium region to generate the initialization region.

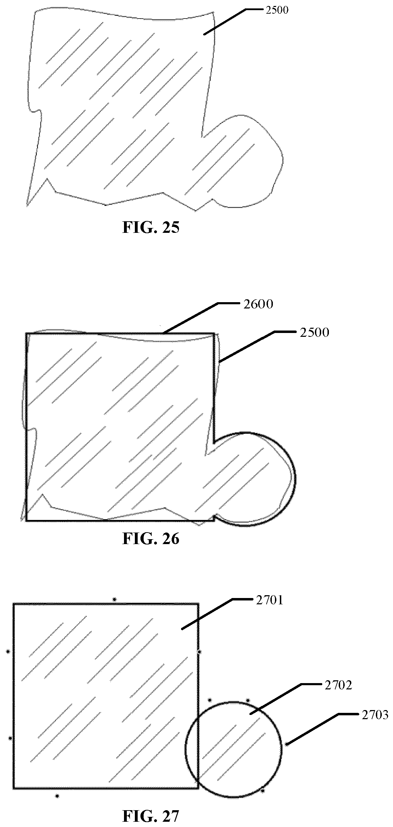

In an exemplary embodiment of the present disclosure, a surface medium region identification device (for example, a surface medium sensor capable of identifying a surface medium) may be used to scan the boundary of the surface medium region. For example, a carpet identification device is used to scan a boundary of a carpet region. After scanning, an initialization region 2500 shown in FIG. 25 may be generated based on the scanned boundary, and the initialization region 2500 may be further recorded in the automatic cleaning apparatus.

Then, boundary coordinates of the initialization region 2500 may be combined. For example, two or more adjacent boundary coordinates may be combined into one coordinate. Specifically, an average coordinate value of two or more adjacent boundary coordinates may be taken as a boundary coordinate of the combined region, so as to obtain a combined region 2600 shown in FIG. 26 whose boundary is smoother than that of the initialization region 2500. Meanwhile, the combined region 2600 may be further stored in the automatic cleaning apparatus for reference during subsequent cleaning.

In an exemplary embodiment of the present disclosure, after obtaining of the combined region 2600, it may also be necessary to demarcate, as shown in FIG. 27, the combined region 2600 based on a preset shape to form a plurality of sub-regions 2701 and 2702; and store the plurality of sub-regions 2701 and 2702 and the like in the automatic cleaning apparatus. In a subsequent cleaning process, partial cleaning may be performed on the sub-region as needed.

However, in an exemplary embodiment of the present disclosure, after the plurality of sub-regions is obtained, it may also be necessary to smoothen each sub-region based on the preset shape, so as to obtain an edge-smoothened surface medium region map.

In actual applications, when the automatic cleaning apparatus scans the boundary of the surface medium region, minimum units that can be identified are point coordinates. These point coordinates enclose the initialization region, that is, the initialization region is composed of a plurality of initial boundary coordinates. Similarly, the combined region is composed of a plurality of combined boundary coordinates.

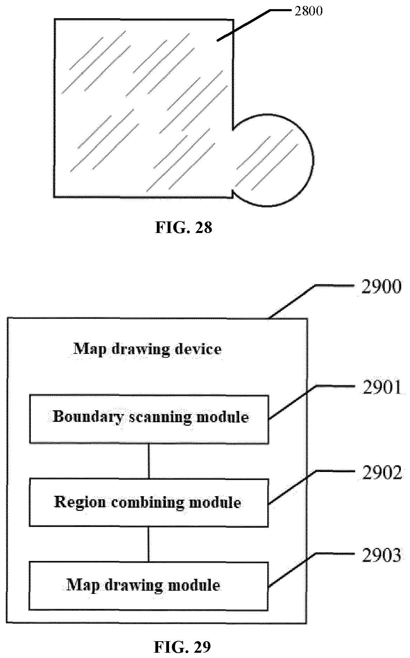

In an exemplary embodiment of the present disclosure, in a process of smoothening each sub-region, a combined boundary coordinate that is on an outer side of the sub-region and close to the sub-region may be deleted. For example, redundant combined boundary coordinate points 2703 in FIG. 27 may be deleted, so that redundant coordinate data can be removed. Therefore, a drawn surface medium region map is closer to conventional shapes such as the preset shape. This avoids drawing of unconventional maps such as a map having a sharp-boundary conical shape, and improves the accuracy of the drawn surface medium region map, thereby providing more accurate reference for subsequent cleaning of the automatic cleaning apparatus. FIG. 28 shows an example of a surface medium region map 2800 drawn according to the map drawing method according to this exemplary embodiment of the present disclosure.

It should be noted that the combined boundary coordinate that is on the outer side of the sub-region and close to the sub-region herein refers to all combined boundary coordinates outside all the sub-regions. In addition, the combined boundary coordinate that is on the outer side of the sub-region and close to the sub-region may be determined based on a shortest distance from the boundary of the sub-region. For example, if a combined boundary coordinate is at a shortest distance from a boundary of a sub-region, that is, a distance between a combined boundary coordinate and a boundary of a nearest sub-region is less than a preset distance, the combined boundary coordinate is determined as the combined boundary coordinate that is on the outer side of the sub-region and close to the sub-region.

In actual applications, a value of the preset distance may be set based on an actual condition, for example, determined based on a size of the sub-region. This is not particularly limited in exemplary embodiments.

In an exemplary embodiment of the present disclosure, after the combined boundary coordinate that is on the outer side of the sub-region and close to the sub-region is deleted, the remaining combined boundary coordinates may be sequentially connected by lines to draw a smoother boundary of the surface medium region, thereby laying the foundation for obtaining an edge-smoothened surface medium region map.

After the boundary of the surface medium region is drawn, it may also be necessary to fill the boundary of the surface medium region with a surface medium mark, thereby obtaining the surface medium region map. The surface medium mark may be a color mark, that is, the boundary of the surface medium region is filled with a color different from that of another surface medium region for differentiation. Alternatively, the surface medium mark may be a mark that is highly distinguishable by other machines such as an automatic cleaning apparatus. This is not particularly limited in exemplary embodiments of the present disclosure.

In actual application, the preset shape may be a square, a circle, or other shapes such as a rhombus. As shown in FIG. 27, the sub-region 2701 and the sub-region 2702 that are determined based on the preset shape are a square region and a circular region, respectively. A specific preset shape is not particularly limited in exemplary embodiments of the present disclosure.

After the surface medium region map is obtained, the surface medium region may be further stored in a memory of the automatic cleaning apparatus. Then, the automatic cleaning apparatus may send the surface medium region to a user terminal together with a stored room map, so that a user can view the room map with the surface medium region map. This facilitates subsequent control operations for the user.

In actual applications, the automatic cleaning apparatus further includes other functions that facilitate overall operation. Details are not described in exemplary embodiments.

It should be noted that although the steps of the method in the present disclosure are described in the accompanying drawings in a particular sequence, it is not required or implied that the steps must be performed in that particular sequence or that all of the steps shown must be performed to achieve the desired results. Additionally or alternatively, some steps may be omitted, a plurality of steps may be combined and performed as one step, and/or one step may be split and performed as a plurality of steps, and so on.

An exemplary embodiment of the present disclosure further provides a map drawing device, disposed in an automatic cleaning apparatus including a surface medium sensor. As shown in FIG. 29, the map drawing device 2900 may include a boundary scanning module 2901, a region combining module 2902, and a map drawing module 2903.

The boundary scanning module 2901 is configured to scan a boundary of a surface medium region to generate an initialization region.

The region combining module 2902 is configured to combine boundary coordinates of the initialization region to obtain a combined region.

The map drawing module 2903 is configured to: divide the combined region into a plurality of sub-regions based on a preset shape; and draw the boundary of the surface medium region based on the sub-regions and the combined region, so as to obtain a surface medium region map.

Specific details of the modules of the above map drawing device have been provided in the detailed description of the corresponding map drawing method. Therefore, details are not described herein again.

It should be noted that although a plurality of modules or units of the apparatus used for execution are described in detail above, such a division is not mandatory. Actually, based on the embodiments of the present disclosure, features and functions of two or more modules or units described above may be embodied in one module or unit. Conversely, features and functions of one module or unit described above may be embodied in a plurality of modules or units through further division.

An exemplary embodiment of the present disclosure further provides an electronic apparatus that can be configured to implement the above method. Those skilled in the art can understand that aspects of the present disclosure may be implemented as systems, methods, or program products. The aspects of the present disclosure may be specifically implemented in a form of a fully hardware implementation, a fully software implementation (including firmware, microcode, or the like), or a combination of hardware and software, which may be collectively referred to as a "circuit", "module", or "system".

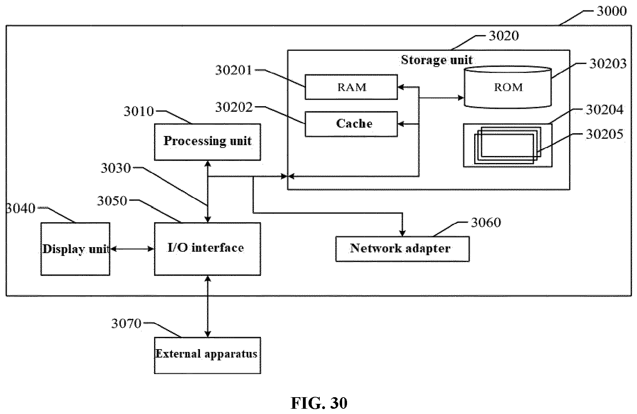

An electronic apparatus 3000 according to the implementation of the present disclosure is described below with reference to FIG. 30. The electronic apparatus 3000 shown in FIG. 30 is merely an example, and shall not impose any limitation on the function and scope of use of the embodiments of the present disclosure.

As shown in FIG. 30, the electronic apparatus 3000 is represented in the form of a general-purpose computing apparatus. Components of the electronic apparatus 3000 may include, but are not limited to: at least one processing unit 3010, at least one storage unit 3020, a bus 3030 connecting different system components (including the storage unit 3020 and the processing unit 3010), and a display unit 3040.

The storage unit 3020 stores program codes therein. The program codes may be executed by the processing unit 3010 to cause the processing unit 3010 to perform the steps according to the various exemplary embodiments of the present disclosure described in the above "exemplary methods" of the specification. For example, the processing unit 3010 may perform the following steps shown in FIG. 19: S2010, acquiring room map data and region map data; S2020, drawing a room map based on the room map data, and drawing a region map layer on the room map based on the region map data; and S2030, displaying the room map covered with the region map layer. For example, the processing unit 3010 may perform the following steps shown in FIG. 24: S2410, scanning a boundary of a surface medium region to generate an initialization region; S2420, combining boundary coordinates of the initialization region to obtain a combined region; and S2430, dividing the combined region into a plurality of sub-regions based on a preset shape; and drawing the boundary of the surface medium region based on the sub-regions and the combined region, so as to obtain a surface medium region map.

The storage unit 3020 may include a readable medium in the form of a volatile storage unit, such as a random access memory (RAM) 30201 and/or a cache 30202, and may further include a read-only memory (ROM) 30203.

The storage unit 3020 may further include a program/utility tool 30204 having a set of (at least one) program modules 30205 that include but are not limited to: an operating system, one or more application programs, other program modules, and program data. Each of these examples or a combination thereof may include an implementation of a network environment.

The bus 3030 may represent one or more of a plurality of types of bus structures, including a storage unit bus or storage unit controller, a peripheral bus, an accelerated graphics port, a processing unit, or a local bus using any of the plurality of bus structures.

The electronic apparatus 3000 may also communicate with one or more external apparatuses 3070 (such as a keyboard, a pointing apparatus, or a Bluetooth apparatus), and may also communicate with one or more apparatuses that enable a user to interact with the electronic apparatus 3000, and/or may communicate with any apparatus (such as a router, or a modem) that enables the electronic apparatus 3000 to communicate with one or more other computing apparatuses. Such communication may be performed through an input/output (I/O) interface 3050. In addition, the electronic apparatus 3000 may also communicate with one or more networks (such as a local area network (LAN), a wide area network (WAN), and/or a public network such as the Internet) via a network adapter 3060. As shown in the figure, the network adapter 3060 communicates with other modules of the electronic apparatus 3000 through the bus 3030. It should be understood that, although not shown in the figure, other hardware and/or software modules may be used in combination with the electronic apparatus 3000, including but not limited to: microcode, an apparatus driver, a redundant processing unit, an external disk drive array, a RAID system, a tape driver, a data backup storage system, and the like.

Through the above description of the embodiments, those skilled in the art may easily understand that the exemplary embodiments described herein may be implemented by software, or may be implemented by software in combination with necessary hardware. Therefore, the technical solutions according to the embodiments of the present disclosure may be implemented in a form of a software product. The software product may be stored in a non-volatile storage medium (which may be a CD-ROM, a USB flash drive, a removable hard disk, or the like) or in a network, and includes a plurality of instructions to cause a computing apparatus (which may be a personal computer, a server, a terminal device, a network apparatus, or the like) to perform the method according to the embodiments of the present disclosure.

An exemplary embodiment of the present disclosure further provides a computer-readable storage medium, wherein the computer-readable storage medium stores a program product that can be used to implement the method in the specification. In some possible embodiments, various aspects of the present disclosure may also be realized in a form of a program product, which includes program code. When the program product runs on a terminal device, the program code is used to enable the terminal device to perform the steps according to various exemplary embodiments of the present disclosure described in the above "exemplary methods" of the specification.

A program product for implementing the above method according to an embodiment of the present disclosure may be a portable compact disk read-only memory (CD-ROM), includes program code, and may be run on a terminal device, for example, a personal computer. However, the program product of the present disclosure is not limited thereto. The readable storage medium herein may be any tangible medium containing or storing a program which may be used by or in combination with an instruction execution system, device, or apparatus.

The program product may be any combination of one or more readable medium. The readable medium may be a readable signal medium or a readable storage medium. The readable storage medium may be, for example but not limited to, electric, magnetic, optical, electromagnetic, infrared, or semiconductor systems, devices, or apparatuses, or any combination thereof. More specific examples (non-exhaustive list) of the readable storage medium include: an electrical connection having one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage apparatus, a magnetic storage apparatus, or any suitable combination thereof.

A computer-readable signal medium may include a data signal propagated in a baseband or as a part of a carrier, in which readable program code is carried. The propagated data signal may be in various forms, including but not limited to an electromagnetic signal, an optical signal, or any suitable combination thereof. The readable signal medium may also be any readable medium other than the readable storage medium. The readable medium can send, propagate, or transmit a program used by or in combination with an instruction execution system, device, or apparatus.

The program code contained in the readable medium may be transmitted by any suitable medium, including but not limited to wireless, wired, optical cable, radio frequency (RF), etc., or any suitable combination thereof.

The program code for performing operations of the present disclosure can be written in one or more programming languages or any combination thereof, wherein the programming languages include object-oriented programming languages, such as Java and C++, and further include conventional procedural programming languages, such as "C" language or similar programming languages. The program code may be completely executed on a computing apparatus of a user, partially executed on a user equipment, executed as an independent software package, partially executed on a computing apparatus of a user and partially executed on a remote computing apparatus, or completely executed on a remote computing apparatus or server. In the circumstance involving a remote computing apparatus, the remote computing apparatus may be connected to a user's computing apparatus over any type of network, including a local area network (LAN) or wide area network (WAN), or may be connected to an external computing apparatus (for example, connected over the Internet using an Internet service provider).

In addition, the above accompanying drawings are merely schematic illustrations of the processes included in the method according to the exemplary embodiments of the present disclosure, and are not intended for limitation. It is easily understood that the processes shown in the above accompanying drawings do not indicate or are limited to a chronological sequence of these processes. In addition, it is also easily understood that these processes can be performed synchronously or asynchronously, for example, in a plurality of modules.

Those skilled in the art may easily figure out other embodiments of the present disclosure after considering the specification and practicing the present disclosure disclosed herein. The present application is intended to cover any variations, purposes or adaptive changes of the present disclosure. Such variations, purposes or applicable changes follow the general principle of the present disclosure and include common knowledge or conventional technical means in the technical field which is not disclosed in the present disclosure. The specification and embodiments are merely considered as illustrative, and the real scope and spirit of the present disclosure are pointed out by the claims.

It should be noted that, the present disclosure is not limited to the precise structures described above and shown in the accompanying drawings, and can be modified and changed in many ways without departing from the scope of the present disclosure. The scope of the present disclosure is defined by the appended claims.

## Claims

1. A map display method, comprising:
acquiring room map data and region map data;
drawing a room map based on the room map data, and drawing a region map layer on the room map based on the region map data; and
displaying the room map covered with the region map layer.

2. The map display method according to claim 1, wherein the drawing the region map layer on the room map based on the region map data comprises:
determining a position relationship between the room map and the region map layer based on the room map data and the region map data; and
demarcating a sub-region corresponding to the region map layer from the room map based on the position relationship, and drawing the region map layer on the sub-region.

3. The map display method according to claim 2, wherein drawing the region map layer on the sub-region comprises:
magnifying the sub-region by a preset scale, and obtaining the region map layer by drawing units corresponding to the region map data on the magnified sub-region.

4. The map display method according to claim 3, wherein the region map data comprises region boundary coordinate data; and the drawing the units corresponding to the region map data on the magnified sub-region comprises:
drawing point units corresponding to the region map data on the magnified sub-region one by one.

5. The map display method according to claim 3 or 4, wherein the method further comprises:
after obtaining the region map layer, restoring the sub-region to an original size, and covering the room map with the region map layer.

6. The map display method according to claim 2, wherein an area of the sub-region is greater than an area of the region map layer, so that the region map layer is drawn within the sub-region.

7. The map display method according to claim 1, wherein the room map data comprises room boundary coordinate data; and
the drawing the room map based on the room map data comprises:
determining a shape and a size of a room map layer based on the room boundary coordinate data; and
obtaining the room map by drawing the room boundary coordinate data on the room map layer one by one.

8. A map display device, comprising:
a data acquiring module, configured to obtain room map data and region map data;
a map drawing module, configured to draw a room map based on the room map data, and draw a region map layer on the room map based on the region map data; and
a map display module, configured to display the room map covered with the region map layer.

9. A computer-readable storage medium, wherein the computer-readable storage medium stores a computer program, and the computer program is executed by a processor to implement the map display method according to any one of claims 1 to 7.

10. An electronic apparatus, comprising:
a processor; and
a memory, configured to store an instruction executable by the processor, wherein
the processor is configured to execute the executable instruction to implement the map display method according to any one of claims 1 to 7.
